# EUROPÄISCHE PATENTSCHRIFT

(11) **EP 0 802 235 B1**
(45) Veröffentlichungstag und Bekanntmachung des Hinweises auf die Patenterteilung: **26.04.2006**
(21) Anmeldenummer: 97400104.2
(22) Anmeldetag: 20.01.1997
(51) Int. Cl.: C08L 83/04, C08L 101/00, C08K 13/02, C08K 3/22, C08K 5/098, C08K 3/24

(54) **Flammwidrige, halogenfreie Mischung**
Flame-retardant, halogen-free mixture
Mélange ignifugée et exempte d'halogène

(30) Priorität: 19.03.1996 DE 19610513
(43) Veröffentlichungstag der Anmeldung: 22.10.1997
(73) Patentinhaber: Nexans, 75008 Paris (FR)
(72) Erfinder: Rous, Friedemann, 95444 Bayreuth (DE)
(74) Vertreter: Döring, Roger

(56) Entgegenhaltungen:
- EP-A- 0 537 013

## Beschreibung

Die vorliegende Erfindung betrifft eine flammwidrige, halogenfreie Mischung auf Basis polymerer Werkstoffe mit erhöhter Wärmestandfestigkeit, insbesondere zur Herstellung elektrischer und/oder optischer Kabel und Leitungen.

Flammwidrige, halogenfreie Mischungen auf der Basis von Polyolefinen, die bestimmte Salze einer Carbonsäure, wie Magnesiumstearat, in Kombination mit Silikongummi enthalten und für die Isolierung elektrischer Kabel vorgesehen sind, sind bereits bekannt (US-PS 4,273,691). Den zunehmenden Forderungen der Abnehmer solcher Kabel jedoch, die dahin gehen, ein Ausbreiten der Flamme längs des Kabels im Brandfall auch in senkrechter Verlegung zu vermeiden sowie ein Abtropfen bei erhöhten Umgebungstemperaturen geschmolzenen Isoliermaterials zu vermeiden, genügen die bekannten Mischungen nicht im ausreichenden Maße.

Bekannt ist es auch, flammwidrige Mischungen aus Polymermaterialien, die zur Isolierung und/oder zum Schutz geeignet sind, dem Basismaterial Silikon und Calciumcarbonat zuzufügen sowie als dritte Komponente in das Basismaterial ein Metallsalz ausgewählt aus Blei, Mangan, Kobalt, Eisen, Nickel oder Aluminium einzubringen. Auch diese bekannte Mischung läßt solche Polymermaterialien außer Betracht, die eine erhöhte Wärmestandfestigkeit aufweisen und daher zur Lösung spezieller Probleme geeignet sind. Ein Problemfeld hier ist beispielsweise die Kraftfahrzeugindustrie, die für die Verkabelung eines Kraftfahrzeugs Kabel- oder Mantelmaterial für die verwendeten Leitungen mit erhöhter Wärmestandfestigkeit empfiehlt, aber auch fordert, daß die aus Isoliermaterialien hergestellten Anschlußteile wie Stecker oder Kupplungen, Anschlußflansche und dergleichen eine hinreichende Wärmestandfestigkeit aufweisen, gleichzeitig aber flammwidrig und halogenfrei sind.

Aus der EP-A-0 537 013 ist eine flammhemmende thermoplastische Zusammensetzung bekannt, enthaltend 30 bis 90 Gew.% eines normalerweise entflammbaren thermoplastischen Harzes und 70 bis 10 Gew.% eines flammhemmenden Zusatzes in Pulverform, wobei der flammhemmende Zusatz hergestellt wurde durch Vermengen von 2 bis 40 Gew.% eines Silikonöls, 1 bis 20 Gew.% eines Silikonharzes, das in dem Silikonöl löslich ist und 40 bis 96 Gew.% Magnesiumhydroxid, bis ein fließfähiges Pulver gebildet ist. Der flammhemmende Zusatz kann darüber hinaus ein organisches Salz eines Metalles der Gruppe lla des periodischen Systems z. B. Magnesiumstearat enthalten.

Ausgehend von diesen bekannten Mischungen liegt daher der Erfindung die Aufgabe zugrunde, eine Mischung anzugeben, die bei hoher Wärmestandfestigkeit halogenfrei ist und flammwidrige Eigenschaften aufweist. Darüber hinaus kommt es darauf an, daß Produkte aus solchen Mischungen, wie Kabel- und Leitungsisolierungen oder Mäntel rationell und kostengünstig gefertigt werden können, daß diese Mischung aber auch es gestattet, Spritzgußteile herzustellen, die die beschriebenen Eigenschaften aufweisen.

Gelöst wird diese Aufgabe gemäß der Erfindung durch die im Anspruch 1 beschriebene Mischung.

Eine solche Zusammensetzung läßt eine problemlose Verarbeitung der Mischung beispielsweise bei der Herstellung von elektrischen und/oder optischen Kabeln und Leitungen als Isoliermaterialien, Füllstoff- oder Mantelwerkstoff zu, gestattet aber ebenso den Einsatz als Spritzgußmaterial beispielsweise für die Herstellung von Steckern, Kupplungen, Muffenkörpern, Rohren, Schläuchen, Wellrohren und dergleichen. Für polymere Werkstoffe erhöhter Wärmestandfestigkeit bietet die Erfindung ein flammwidrig- oder flammfestmachendes System, das den Sauerstoffindex als Maß für die Flammwidrigkeit des Polymermaterials erhöht.

Eine besonders bevorzugte Variante der erfindungsgemäßen Mischung ist die, wenn, bezogen auf 100 Teile Basismaterial, das flammfestmachende System

| | |
|---|---|
| 1 bis 15 | Teile des Metallsalzes, |
| 30 bis 180 | Teile des Metallhydroxides |
| 0,3 bis 20 | Teile Silikonöl und |
| 0,5 bis 5 | Teile maleinsäureanhydridgepfropftes Basispolymer |

enthält.

In dieser Kombination ist der Anteil an Metallhydroxiden gegenüber bekannten Mischungen unter Beibehaltung der Flammwidrigkeit wesentlich verringert, umgekehrt können dadurch das Kälteverhalten und die mechanischen Eigenschaften wesentlich verbessert werden. Im Brandfall ist eine solche Mischung raucharm, eine Gefahr durch im Rauch vorhandene giftige Gase ist vermieden. Darüber hinaus ist die erfindungsgemäße Mischung gleichspannungsbeständig, die elektrischen Eigenschaften insgesamt können den jeweiligen Erfordernissen problemlos angepaßt werden. Der Zusatz von maleinsäureanhydridgepfropftem Basispolymer verbessert die mechanischen Eigenschaften und trägt zur Verbesserung der Oberfläche bei.

Als Metallsalze, die nach der Erfindung vorteilhaft einsetzbar sind, kommen neben Barium- oder Strontiumstearaten vor allem das Calciumstearat, als Metallsalz der Carbonsäure, und das Magnesiumstearat in Frage, wobei letzterem in der Regel der Vorzug gegeben wird. Der besondere Vorteil der Erfindung ist darin zu sehen, daß mit dem Einbringen der beanspruchten Komponenten in ihrer Gesamtheit, gleichsam als flammfestmachendes System, die Eigenschaften der gesamten Mischung durch Variation weiterer Komponenten gezielt geändert werden kann, so daß eine Optimierung der erfindungsgemäßen Mischung an beliebige Erfordernisse möglich ist.

Das Metallhydroxid kann ein Aluminiumhydroxid sein, oder ein Magnesiumhydroxid, das sich in Durchführung der Erfindung als besonders vorteilhaft erwiesen hat.

Wie bereits ausgeführt, bilden die dem Basismaterial zugegebenen Komponenten ein flammfestmachendes System, das eine Variation des Basismaterials im Hinblick auf mechanische oder elektrische Eigenschaften erlaubt. So kann beispielsweise das Basispolymer erhöhter Wärmestandfestigkeit ein Polyethylen hoher Dichte sein aber auch ein Gemisch aus Polymeren geringerer Wärmestandfestigkeit und einer die Wärmestandfestigkeit erhöhenden Komponente wie beispielsweise ein Polyethylen hoher Dichte oder ein Polypropylen.

Eine bevorzugte Ausführungsform der Erfindung ergibt sich dann, wenn als Basispolymer erhöhter Wärmestandfestigkeit ein Polypropylen verwendet wird. In Verbindung mit dem beanspruchten flammfestmachenden System ergibt sich eine Mischung mit guten mechanischen und elektrischen Eigenschaften des hergestellten Produkts, die Mischung ist kostengünstig herzustellen, da sie auf handelsüblichen bekannten Verarbeitungsmaschinen herstellbar ist.

Das Polypropylen kann auch ein Copolymer sein, z. B. ein PP-Blockcopolymer, ein PP-Randomcopolymer oder ein PP-Random-Blockcopolymer.

Selbstverständlich kann die erfindungsgemäß aufgebaute Mischung auch mit anorganischen Füllstoffen verstreckt sein, als vorteilhaft hat es sich hierbei erwiesen, bezogen auf 100 Teile Basispolymer, 10 bis 80 Teile Füllstoffe zuzugeben. Ein solcher Füllstoff kann beispielsweise Kreide (CaCO₃) sein.

Unabhängig von der mit der Erfindung erzielten Flammfestigkeit bei gleichzeitig erhöhter Wärmestandfestigkeit können die an die jeweiligen Verwendungszwecke angepaßten Mischungen als unvernetzbare, aber auch als vernetzbare Mischungen problemlos verarbeitet werden. Die Vernetzung kann im Rahmen der üblichen Bedingungen peroxidisch unter Zuhilfenahme entsprechender Vernetzungsmittel und unter Druck und/oder Wärme erfolgen, die Vernetzung kann aber auch mittels eines silangepfropften Basispolymers durchgeführt werden, das anschließend unter der Einwirkung von Feuchtigkeit vernetzbar ist oder durch energiereiche Strahlung.

Durch Abmischung des Polypropylen-Copolymeren mit entsprechenden Polyolefinpolymeren oder Copolymeren, wie Polyethylenacrylat oder Vinylacetat, die durch energiereiche Strahlung vernetzbar sind, werden auch solche Polypropylen-Mischungen strahlenvernetzbar und damit nochmals deutlich wärmestandfester.

Zur Zeit ist es üblich, die unter dem Begriff flammfest oder flammwidrig angebotene Mischungen mit einem hohen Anteil an Metallhydroxiden zu füllen, damit sie vorgeschriebene Brandprüfungen bestehen. Der hohe Füllgrad einer solchen Komponente verschlechtert jedoch die mechanischen Eigenschaften und das Kälteverhalten der Mischung, aber auch die elektrischen Eigenschaften, insbesondere die Gleichspannungsbeständigkeit in heißem Wasser unter ständiger Spannungsbelastung. Für das erfindungsgemäß wesentliche flammfestmachende System kommt es dagegen darauf an, den Anteil an Metallhydroxid deutlich gering zu halten unter gleichzeitiger Beibehaltung der Flammwidrigkeit, so daß das Kälteverhalten und die mechanischen Eigenschaften der Mischung verbessert sind. Eine elektrische Verbesserung der erfindungsgemäßen Mischung ergibt sich insbesondere durch die Zugabe von bestimmten Anteilen an Silikonöl. Während z. B. bei einem Gleichspannungstest mit 48 V Gleichspannung in 85° heißem Wasser ein aus der Mischung hergestelltes Produkt, beispielsweise ein Kabelmantel, bereits nach einigen Stunden bis zwei Tagen ausfällt, wird dieser Test länger als 30 Tage bestanden, wenn man der Mischung im Sinne der Erfindung beispielsweise 0,5 bis 1 % Silikonöl zusetzt.

Anhand nachfolgender Mischungsbeispiele sei die Erfindung noch einmal näher erläutert.

### Mischungsbeispiel 1

| | |
|---|---|
| PP-Copolymer | 80-100 Teile |
| Mg(OH)₂ | 80-110 Teile |
| Mg-Stearat | 3-8 Teile |
| Silikonöl | 2-6 Teile |
| Maleinsäureanhydridgepfropftes PP | 1,5-4 Teile |
| Antioxidant | 0,6 Teile |

| | |
|---|---|
| Eigenschaften | |
| Zugfestigkeit | 25 Mpa |
| Reißdehnung | 520 % |
| LOI | 29-30 |
| Wärmedruck bei 120°C | 15 % |

Fehlstrommessung nach 21 d
Lagerung in 85°C heißem Wasser
und 48 V Gleichspannung < 0,02 µA

Als wesentliches Prüfungsergebnis einer solchen Polypropylen-Copolymer-Mischung bleibt der hohe Sauerstoffindex (LOI) festzuhalten, der die Flammwidrigkeit bestimmt sowie die Wärmestandfestigkeit bei 120° ebenso wie die Gleichspannungsbeständigkeit.

### Mischungsbeispiel II

| | |
|---|---|
| HDPE | 60-80 Teile |
| LLDPE | 20-40 Teile |
| AL(OH)₃ | 80-120 Teile |
| Mg-Stearat | 3-8 Teile |
| Silikonöl | 2-6 Teile |
| Maleinsäure gepfropftes Polyethylen | 1 ,5-4 Teile |
| Antioxidant | 0,4-0,6 Teile |

### Mischungsbeispiel III

| | |
|---|---|
| PP-Copolymer | 40-50 Teile |
| LLDPE | 40-50 Teile |
| HDPE | 20-30 Teile |
| Mg(OH)₂ | 40-55 Teile |
| CaCO₃ | 40-55 Teile |
| Mg-Stearat | 3-8 Teile |
| Silikonöl | 2-6 Teile |
| Maleinsäure gepfropftes PP oder PE | 1,5-4 Teile |
| Antioxidant | 0,4-0,6 Teile |

Die wesentlichen Eigenschaften so aufgebauter Mischungen sind

| | |
|---|---|
| Zugfestigkeit | 18 Mpa |
| Reißdehnung | 540 % |
| LOI | 27-31 |
| Wärmedruck bei 120° | 30 % |

Fehlstrommessung nach 21 d
Lagerung in 85°C heißem Wasser
und 48 V Gleichspannung < 0,02 µA

## Patentansprüche

1. Flammwidrige, halogenfreie Mischung auf Basis thermoplastischer polymerer Werkstoffe mit erhöhter Wärmestandfestigkeit, zur Herstellung elektrischer und/oder optischer Kabel und Leitungen, wobei die Mischung bezogen auf 100 Teile Basispolymer, 1 - 15 Teile eines Salzes eines Metalles aus der Gruppe II, IIa oder IIb des periodischen Systems, 30 - 180 Teile eines Metallhydroxids, 0,3 - 20 Teile Silikonöl sowie 0,5 - 5 Teile eines maleinsäureanhydridgepfropften Basispolymers enthält.

2. Mischung nach Anspruch 1, **dadurch gekennzeichnet, daß** das Metallsalz das Salz einer Carbonsäure ist.

3. Mischung nach Anspruch 2, **dadurch gekennzeichnet, daß** das Metallsalz der Carbonsäure ein Calciumstearat ist.

4. Mischung nach Anspruch 2, **dadurch gekennzeichnet, daß** das Metallsalz der Carbonsäure ein Magnesiumstearat ist.

5. Mischung nach einem der Ansprüche 1 bis 4, **dadurch gekennzeichnet, daß** das Metallhydroxid ein Magnesiumhydroxid ist.

6. Mischung nach einem der Ansprüche 1 bis 4, **dadurch gekennzeichnet, daß** das Metallhydroxid ein Aluminiumhydroxid ist.

7. Mischung nach einem der Ansprüche 1 bis 6, **dadurch gekennzeichnet, daß** das Basispolymer erhöhter Wärmestandfestigkeit ein Polyethylen hoher Dichte ist.

8. Mischung nach einem der Ansprüche 1 bis 6, **dadurch gekennzeichnet, daß** das Basispolymer erhöhter Wärmestandfestigkeit ein Polypropylen ist.

9. Mischung nach Anspruch 8, **dadurch gekennzeichnet, daß** das Polypropylen ein Copolymer, z. B. ein PP-Blockcopolymer, ein PP-Randomcopolymer oder ein PP-Random-Blockcopolymer ist.

10. Mischung nach einem der Ansprüche 1 bis 9, **dadurch gekennzeichnet, daß** das Basispolymer ein Gemisch aus Polymeren geringer Wärmestandfestigkeit und einer die Wärmestandfestigkeit erhöhenden Komponente ist.

11. Mischung nach einem der Ansprüche 1 bis 10, **gekennzeichnet durch** einen Anteil von 10 - 80 Teile anorganischer Füllstoffe, bezogen auf 100 Teile Basispolymer.

12. Mischung nach Anspruch 11, **dadurch gekennzeichnet, daß** als Füllstoff Kreide (CaCO₃) verwendet ist.

13. Mischung nach einem der Ansprüche 1 bis 12, **dadurch gekennzeichnet, daß** das Basispolymer vernetzbar ist.

## Claims

1. Flame-retardant, halogen-free mixture based on thermoplastic polymeric materials with increased heat resistance, for production of electrical and/or optical cables and lines, where the mixture comprises, based on 100 parts of base polymer, from 1 to 15 parts of a salt of a metal from group II, IIa or IIb of the periodic table of the elements, from 30 to 180 parts of a metal hydroxide, from 0.3 to 20 parts of silicone oil and from 0.5 to 5 parts of a maleic-anhydride-grafted base polymer.

2. Mixture according to Claim 1, **characterized in that** the metal salt is the salt of a carboxylic acid.

3. Mixture according to Claim 2, **characterized in that** the metal salt of the carboxylic acid is a calcium stearate.

4. Mixture according to Claim 2, **characterized in that** the metal salt of the carboxylic acid is a magnesium stearate.

5. Mixture according to any of Claims 1 to 4, **characterized in that** the metal hydroxide is a magnesium hydroxide.

6. Mixture according to any of Claims 1 to 4, **characterized in that** the metal hydroxide is an aluminium hydroxide.

7. Mixture according to any of Claims 1 to 6, **characterized in that** the base polymer of increased heat resistance is a high-density polyethylene.

8. Mixture according to any of Claims 1 to 6, **characterized in that** the base polymer of increased heat resistance is a polypropylene.

9. Mixture according to Claim 8, **characterized in that** the polypropylene is a copolymer, e.g. a PP block copolymer, a PP random copolymer or a PP random block copolymer.

10. Mixture according to any of Claims 1 to 9, **characterized in that** the base polymer is a mixture composed of polymers of very low heat resistance and of a component increasing heat resistance.

11. Mixture according to any of Claims 1 to 10, **characterized by** a content of from 10 to 80 parts of inorganic filler, based on 100 parts of base polymer.

12. Mixture according to Claim 11, **characterized in that** chalk (CaCO₃) is used as filler.

13. Mixture according to any of Claims 1 to 12, **characterized in that** the base polymer is crosslinkable.

## Revendications

1. Mélange ignifuge et exempt d'halogènes à base de matériaux polymères thermoplastiques avec une résistance à la chaleur augmentée, pour la fabrication de câbles et de conducteurs électriques et/ou optiques, dans lequel le mélange par rapport à 100 parties de polymère de base, contient 1 à 15 parties d'un sel d'un métal du groupe II, IIa ou IIb du système périodique, 30 à 180 parties d'un hydroxyde métallique, 0,3 à 20 parties d'huile de silicone et 0,5 à 5 parties d'un polymère de base greffé avec de l'anhydride d'acide maléique.

2. Mélange selon la revendication 1, **caractérisé en ce que** le sel métallique est le sel d'un acide carboxylique.

3. Mélange selon la revendication 2, **caractérisé en ce que** le sel métallique de l'acide carboxylique est le stéarate de calcium.

4. Mélange selon la revendication 2, **caractérisé en ce que** le sel métallique de l'acide carboxylique est le stéarate de magnésium.

5. Mélange selon l'une quelconque des revendications 1 à 4, **caractérisé en ce que** l'hydroxyde métallique est l'hydroxyde de magnésium.

6. Mélange selon l'une quelconque des revendications 1 à 4, **caractérisé en ce que** l'hydroxyde métallique est l'hydroxyde d'aluminium.

7. Mélange selon l'une quelconque des revendications 1 à 6, **caractérisé en ce que** le polymère de base de résistance à la chaleur augmentée est un polyéthylène à haute densité.

8. Mélange selon l'une quelconque des revendications 1 à 6, **caractérisé en ce que** le polymère de base de résistance à la chaleur augmentée est un polypropylène.

9. Mélange selon la revendication 8, **caractérisé en ce que** le polypropylène est un copolymère, par exemple un copolymère séquencé de PP, un copolymère aléatoire de PP ou un copolymère séquencé-aléatoire de PP.

10. Mélange selon l'une quelconque des revendications 1 à 9, **caractérisé en ce que** le polymère de base est un mélange de polymères de faible résistance à la chaleur et d'un composant augmentant la résistance à la chaleur.

11. Mélange selon l'une quelconque des revendications 1 à 10, **caractérisé par** une proportion de 10 à 80 parties de charges inorganiques, par rapport à 100 parties de polymère de base.

12. Mélange selon la revendication 11, **caractérisé en ce que** l'on utilise la craie (CaCO₃) comme charge.

13. Mélange selon l'une quelconque des revendications 1 à 12, **caractérisé en ce que** le polymère de base est réticulable.
